# EUROPÄISCHE PATENTSCHRIFT

(11) **EP 3 308 609 B1**
(45) Veröffentlichungstag und Bekanntmachung des Hinweises auf die Patenterteilung: **04.12.2019**
(21) Anmeldenummer: 16751456.1
(22) Anmeldetag: 14.06.2016
(51) Int. Cl.: H05B 37/02, H04L 12/28, G09F 3/20

(54) **GEBÄUDETECHNIKGERÄT, INSBESONDERE BETRIEBSGERÄT FÜR LEUCHTMITTEL**
BUILDING TECHNOLOGY DEVICE, IN PARTICULAR OPERATING DEVICE FOR LIGHT SOURCES
APPAREIL D'ÉQUIPEMENT TECHNIQUE DU BÂTIMENT, EN PARTICULIER APPAREILLAGE POUR SOURCES LUMINEUSES

(30) Priorität: 15.06.2015 DE 102015210937
(43) Veröffentlichungstag der Anmeldung: 18.04.2018
(73) Patentinhaber: Tridonic GmbH & Co. KG, 6851 Dornbirn (AT)
(72) Erfinder: PEREIRA, Eduardo, 8854 Siebnen (CH); FINK, Jürgen, 6900 Bregenz (AT); SCHÖNBERGER, John, 8864 Reichenburg (CH)
(74) Vertreter: Rupp, Christian
(86) Internationale Anmeldenummer: PCT/AT2016/050197
(87) Internationale Veröffentlichungsnummer: WO 2016/201470

(56) Entgegenhaltungen:
- WO-A1-2013/164251
- DE-A1-102010 050 192

## Beschreibung

Die Erfindung betrifft ein Gebäudetechnikgerät, bspw. ein Leuchtmittelmodul, insbesondere ein LED-Modul, mit einem Anzeigemodul, und insbesondere ein Betriebsgerät für Leuchtmittel. Weiter betrifft die Erfindung ein

Anzeigemodul sowie ein Verfahren zur Einstellung von Betriebsparametern in einem Gebäudetechnikgerät. Im Folgenden ist der Begriff "Gerät" allgemein für "Gebäudetechnikgerät" und "Leuchtmittelmodul" verwendet. Insbesondere ist unter "Gebäudetechnikgerät" auch analog ein "Leuchtmittelmodul" zu verstehen
Derzeit findet eine Konfiguration von Geräten, wie beispielsweise Betriebsgeräten für Leuchtmittel, derart statt, dass die Konfiguration von Betriebsparametern in dem Gerät durch einen Hersteller des Geräts bzw. einen Erstausrüster (OEM) erfolgt. Insbesondere kann beispielsweise ein Gerät ohne konfigurierte Betriebsparameter hergestellt werden und die Betriebsparameter können dann, z.B. vor einem Inverkehrbringen des Gebäudetechnikgeräts, durch den Erstausrüster gesetzt werden. Somit können die Gebäudetechnikgeräte für spezifische Einsatzgebiete eingestellt werden.

Die konfigurierten Geräte werden dann vor Ort in Gebäuden eingesetzt. Problematisch ist, dass die Konfiguration der Geräte oft spezifisch für den (geplanten) Einsatzort bzw. den (geplanten) Einsatzzweck erfolgt. So können beispielsweise die Betriebsparameter spezifisch für ein spezifisches Gebäude oder einen bestimmten Raum oder auch für einen bestimmten Szenenverlauf eingestellt werden. Fällt nun ein Gerät aus, so ist es nicht ohne Weiteres möglich, einen Ersatz für das ausgefallene Gerät zu beschaffen. In einem Ersatzgerät müssen zunächst die entsprechenden Betriebsparameter wiederum spezifisch für den Einsatzzweck bzw. Einsatzort definiert werden.

Da bei einem Ausfall des Gebäudetechnikgeräts ein Auslesen der Information nicht oder nicht ohne Weiteres möglich ist, muss daher ggf. erst umständlich herausgefunden werden, welche Parameter für das spezifische Gerät einzustellen sind.

Insbesondere bei einem Ausfall eines Geräts (beispielsweise eines DSI-/DALI-fähigen Betriebsgeräts für Leuchtmittel), ist das Wartungspersonal typischerweise nicht in der Lage, bei nachgekauften Ersatzgeräten selbst alle Betriebsparameter, wie z.B. DALI-Adressierung, Szeneneinstellung, und/oder die Programmierung der sonstigen Betriebsparameter vorzunehmen.

Das Dokument WO 2013/164251 A1 offenbart ein Gebäudetechnikgerät mit einem Anzeigemodul.

Das Dokument DE 102010050192 A1 offenbart ein Verfahren zum Einstellen von Betriebsparametern in Gebäudetechnikgeräten.

Die Erfindung stellt es sich als Aufgabe, das Ersetzen von Gebäudetechnikgeräten zu vereinfachen.

Dazu stellt die Erfindung Vorrichtungen und ein Verfahren gemäß den unabhängigen Ansprüchen 1, 8 und 12 bereit. Weiterbildungen der Erfindung sind Gegenstand der abhängigen Ansprüche. In einem ersten Aspekt wird ein Gebäudetechnikgerät, insbesondere Betriebsgerät für Leuchtmittel, bereitgestellt, aufweisend ein Anzeigemodul, das mit einer Steuereinheit des Gebäudetechnikgeräts in Verbindung steht, wobei das Gebäudetechnikgerät das Anzeigemodul elektrisch versorgt und das Anzeigemodul dazu eingerichtet ist, eine Betriebsparameterinformation des Gebäudetechnikgeräts auch bei Wegfall der elektrischen Versorgung durch das Gebäudetechnikgerät anzuzeigen.

Das Gebäudetechnikgerät kann einen Speicher aufweisen. Das Anzeigemodul kann in dem Speicher gespeicherte Betriebsparameter als die Betriebsparameterinformation anzeigen.

Die Steuereinheit kann ein Microcontroller, IC oder ASIC sein. Die Steuereinheit kann das Anzeigemodul zur Anzeige der Betriebsparameterinformation ansteuern.

Das Gebäudetechnikgerät kann eine Kommunikationsschnittstelle, insbesondere eine DALI-Schnittstelle, aufweisen. Das Anzeigemodul kann über die Kommunikationsschnittstelle empfangene Betriebsparameter als Betriebsparameterinformation anzeigen.

Das Anzeigemodul kann die Betriebsparameterinformation in Form eines maschinenlesbaren Codes und/oder als Klartext anzeigen.

Das Anzeigemodul weist erfindungsgemäß eine Anzeigeeinheit mit elektronischem Papier auf.

Das Gebäudetechnikgerät kann das Anzeigemodul lösbar haltern.

Das Anzeigemodul kann lösbar an dem Gebäudetechnikgerät gehaltert und insbesondere austauschbar und/oder mit anderen Gebäudetechnikgeräten verbindbar sein.

Gemäß einem Beispiel kann das Gebäudetechnikgerät wenigstens eine Kontaktfläche aufweisen und/oder wenigstens einen Verbinder aufweisen, über die das Anzeigemodul mit dem Speicher, der Steuereinheit und/oder der Kommunikationsschnittstelle bzw. mit einer Platine des Gebäudetechnikgeräts verbunden ist, insbesondere wenn das Anzeigemodul an dem Gebäudetechnikgerät gehaltert ist.

Gemäß einem weiteren Beispiel können das Gebäudetechnikgerät und das Anzeigemodul mittels einer Steck, Klemm- und/oder Rastverbindung verbunden sein.

In einem Unteraspekt wird ein Leuchtmittelmodul bereitgestellt, aufweisend ein Anzeigemodul, wobei das Leuchtmittelmodul das Anzeigemodul, das mit einer Steuereinheit des Leuchtmittelmoduls in Verbindung steht, elektrisch versorgt. Das Anzeigemodul kann eine Betriebsparameterinformation des Leuchtmittelmoduls auch bei Wegfall der elektrischen Versorgung durch das Leuchtmittelmodul anzeigen.

In einem zweiten Aspekt wird ein Anzeigemodul das dazu eingerichtet ist, eine Betriebsparameterinformation auch bei Wegfall der elektrischen Versorgung anzuzeigen, bereitgestellt, aufweisend wenigstens eine Kontaktfläche und/oder Verbinder, über die das Anzeigemodul mit einem Speicher, einer Steuereinheit und/oder einer Kommunikationsschnittstelle bzw. mit einer Platine eines Gebäudetechnikgeräts und/oder Leuchtmittelmoduls verbindbar ist, insbesondere wenn das Anzeigemodul an dem Gebäudetechnikgerät oder Leuchtmittelmodul gehaltert ist.

Das Anzeigemodul weist erfindungsgemäß eine Anzeigeeinheit mit elektronischem Papier auf.

Die Anzeigeeinheit kann einen nichtflüchtigen Speicher aufweisen. Das Anzeigemodul kann angezeigte Betriebsparameter in dem nichtflüchtigen Speicher speichern und insbesondere gespeicherte Betriebsparameter bei Verbindung mit einem Betriebsgerät und/oder Leuchtmittelmodul ausgeben.

In einem weiteren Unteraspekt wird ein Gebäudetechnikgerät oder Leuchtmittelmodul bereitgestellt aufweisend einen Sensor, insbesondere einen optischen Sensor, vorzugsweise eine Kamera, der eine von einem Anzeigemodul, wie oben beschrieben, angezeigte Betriebsparameterinformation erfassen kann.

In einem dritten Aspekt wird ein Verfahren bereitgestellt mit den Schritten:
- Erfassen von einer durch ein Anzeigemodul dargestellten Betriebsparameterinformation eines Gebäudetechnikgeräts und/oder Leuchtmittelmoduls, wie oben beschrieben, vorzugsweise mittels eines Lesegeräts,
- Einstellen von Betriebsparametern in einem zweiten Gebäudetechnikgerät und/oder Leuchtmittelmodul basierend auf der erfassten Betriebsparameterinformation. Die erfasste Betriebsparameterinformation kann an einen zentralen Speicher, beispielsweise Server, übermittelt werden. Daraufhin kann eine Versendung des zweiten Gebäudetechnikgeräts und/oder Leuchtmittelmoduls veranlasst werden. Das Einstellen der Betriebsparameter kann vor der Versendung erfolgen, insbesondere durch einen Hersteller des Gebäudetechnikgeräts und/oder Leuchtmittelmoduls.

Das zweite Gebäudetechnikgerät und/oder Leuchtmittelmodul kann einen Sensor aufweisen, mit dem die Betriebsparameterinformation auf eine Benutzerinteraktion hin erfasst wird. Basierend auf der erfassten Betriebsparameterinformation können die Betriebsparameter in dem zweiten Gebäudetechnikgerät und/oder Leuchtmittelmodul eingestellt werden.

Die Erfindung betrifft auch ein Beleuchtungssystem aufweisend zumindest ein Gebäudetechnikgerät, insbesondere Betriebsgerät für Leuchtmittel, und / oder Leuchtmittelmodul gemäß der Erfindung, wobei das Gebäudetechnikgerät und / oder Leuchtmittelmodul ausgelegt ist, Betriebsparameter über die Kommunikationsschnittstelle, insbesondere eine DALI-Schnittstelle, zu empfangen. Das Beleuchtungssystem weist weiterhin zumindest ein Lesegerät auf, welches zum Erfassen von einer durch das Anzeigemodul dargestellten Betriebsparameterinformation eines Gebäudetechnikgeräts und/oder Leuchtmittelmoduls ausgelegt ist. Das Lesegerät ist mit einem Kommunikationsnetzwerk verbunden, wobei das Kommunikationsnetzwerk einen zentralen Speicher aufweist, und wobei der zentralen Speicher, vorzugsweise Server, dazu ausgelegt ist, die Betriebsparameterinformation abzuspeichern.

In wiederum einem weiteren Unteraspekt wird ein Verfahren bereitgestellt, bei dem die abgelesene Betriebsparameterinformation über ein Kommunikationsnetzwerk an zentralen Speicher, vorzugsweise einen Server, übermittelt wird. Das zweite Gebäudetechnikgerät und/oder Leuchtmittelmodul weisen eine Kommunikationsschnittstelle auf, wobei die Kommunikationsschnittstelle direkt oder indirekt mit dem Kommunikationsnetzwerk verbunden ist und die Betriebsparameterinformation über die Kommunikationsschnittstelle durch Abfrage des zentralen Speichers erfasst wird, und basierend auf der erfassten Betriebsparameterinformation die Betriebsparameter in dem zweiten Gebäudetechnikgerät und/oder Leuchtmittelmodul eingestellt.

Das Gebäudetechnikgerät kann eine Kommunikationsschnittstelle, insbesondere eine DALI-Schnittstelle oder auch PLC-Schnittstelle (power line carrier Schnittstelle), aufweisen. Das Gebäudetechnikgerät kann beispielsweise über die Kommunikationsschnittstelle Betriebsparameter von anderen an die Kommunikationsschnittstelle angeschlossenen Gebäudetechnikgeräten wie weiteren Betriebsgeräten empfangen. Das Anzeigemodul kann auch von anderen Gebäudetechnikgeräten über die Kommunikationsschnittstelle empfangene Betriebsparameter als Betriebsparameterinformation anzeigen.

Das Gebäudetechnikgerät kann beispielsweise auch ein Steuergerät sein.

Die Erfindung wird nunmehr auch mit Blick auf die Figuren beschrieben. Dabei zeigen
- Figs. 1a)-1c): Geräte gemäß der Erfindung, und
- Fig. 2a), 2b): exemplarische Verfahrensschritte.

Die Erfindung löst das Problem dadurch, dass Geräte zum Einsatz kommen, die jeweils ein Anzeigemodul aufweisen (zumindest das zuerst eingesetzte Gerät weist ein solches auf). Das Anzeigemodul kann auch im spannungslosen Zustand des Betriebsgeräts die Anzeige halten. Dazu kommt ein sogenanntes "elektronisches Papier" (auch bekannt als "E-Paper") zum Einsatz, das als Anzeigeeinheit in dem Anzeigemodul Verwendung findet. Texte, Informationen oder Bilder werden hierbei dauerhaft angezeigt, ohne dass dafür eine Erhaltungsspannung erforderlich ist. Die Anzeige kann jedoch geändert werden, unter Verwendung von Energie. Elektronisches Papier kann biegsam sein. Im allgemeinen Sprachgebrauch wird auch der Begriff "E-Ink" oft als synonyme Bezeichnung für Elektronisches Papier verwendet. Genaugenommen handelt es sich bei E-Ink nur um ein Produkt das auf Elektrophorese basiert. Bekannte Techniken sind neben der Elektrophorese auch Gyricon, bistabile LCD, Elektrobenetzung (Electrowetting), und die mikromechanisch gesteuerte Interferenz-Modulation.

Auf der Anzeigeeinheit des Anzeigemoduls kann entweder in Klartext oder in kodierter, z.B. maschinenlesbarer, Form eine Betriebsparameterinformation dargestellt werden, die Betriebsparameter wiedergibt, die in dem Gerät eingestellt sind (beispielsweise DALI-Adresse, Szenenparameter, Fehlermeldungen, Gruppeninformationen, ...).

Soll nun ein Gerät ausgetauscht werden, kann die angezeigte Betriebsparameterinformation von der Anzeigeeinheit des Anzeigemoduls abgelesen oder mittels eines Lesegeräts, z.B. einem Scanner für maschinenlesbare Codes, erfasst werden. Somit kann die Betriebsparameterinformation entweder direkt abgelesen oder bei Darstellung in kodierter Form vorzugsweise mit dem Lesegerät gescannt werden. Die erfasste, d.h. die abgelesene und/oder gescannte Information steht damit zur Verfügung. Es ist auch möglich, dass ein Teil der Betriebsparameterinformation als Klartext, und ein anderer Teil kodiert dargestellt wird.

Die erfasste Information kann dann an einen Hersteller des Geräts übermittelt werden, der ein bereits mit den entsprechenden Betriebsparametern konfiguriertes Ersatzgerät bereitstellen kann und insbesondere automatisiert versenden kann.

Insbesondere kann das Lesegerät mit einem Kommunikationsnetzwerk verbunden werden, das die Betriebsparameter Information an den Hersteller/OEM übermittelt. Es ist jedoch auch möglich, dass ein Benutzer die Informationen z.B. über eine Eingabeschnittstelle (z.B. mittels einer Web-Seite) die angezeigten Daten eingibt und so übermittelt. Dazu kann in dem Gerät eine Identifikation abgelegt sein, die ebenfalls Teil der angezeigten Betriebsparameterinformation ist und beim Erfassen der Betriebsparameterinformation an den Hersteller übermittelt wird. Das Lesegerät kann insbesondere ein Kommunikationsendgerät (Handy, Smartphone, ...) sein, auf dem eine Applikation ausgeführt wird, die es ermöglicht, die durch eine Kamera des Kommunikationsendgeräts erfasste Betriebsparameterinformation auszuwerten und an den zentralen Speicher, beispielsweise Server des Herstellers zu übermitteln.

Weiter kann eine Einstellung der Betriebsparameter in einem anderen Gerät, beispielsweise einem Ersatzgerät, manuell durchgeführt werden, indem beispielsweise das Lesegerät eingesetzt wird, um die durch das Anzeigemodul dargestellte Betriebsparameterinformation abzulesen. Von dem Lesegerät, das mit dem anderen Gerät verbindbar ist (beispielsweise durch eine kabellose oder kabelgebundene Verbindung wie USB, WiFi, Bluetooth, NFC, GSM, ...), kann die erfasste Betriebsparameterinformation an das andere Gerät übertragen werden. Dabei kann eine Dekodierung einer kodierten Betriebsparameterinformation entweder durch das Lesegerät oder durch das andere Gerät erfolgen.

Weiter ist es möglich, dass das andere Gerät bereits mit einem Sensor versehen ist, der es erlaubt, die dargestellten Betriebsparameterinformationen direkt einzulesen. Somit kann ein anderes Gerät die Betriebsparameter direkt von dem zu ersetzenden Gerät übernehmen, indem beispielsweise auf eine Benutzeraktion hin das andere Gerät die Betriebsparameterinformation des zu ersetzenden Geräts abliest und entsprechend die Betriebsparameter in dem anderen Gerät einstellt. Der Sensor kann insbesondere ein CMOS oder CCD-Sensor oder eine Kamera sein, der die angezeigte Betriebsparameterinformation abtastet. Eine Steuereinheit des Sensors und/oder des Gerätes kann dann die Verarbeitung der erfassten Betriebsparameterinformation übernehmen. Auf einer Anzeigeeinheit eines Anzeigemoduls, das mit dem anderen Gerät verbunden ist, kann dann wiederum eine Anzeige der Betriebsparameterinformation erfolgen.

Wie bereits erwähnt, kann es sich bei dem Gerät auch um ein Leuchtmittelmodul und insbesondere um ein LED-Modul handeln. Bei den von dem Anzeigemodul eines Leuchtmittelmoduls angezeigten Informationen handelt es sich dann vorzugsweise um Betriebsparameterinformationen des Leuchtmittelmoduls, z.B. den Strom durch bzw. die Spannung über ein Leuchtmittel, Schwellenwerte z.B. für eine Abschaltung, und/oder zuletzt eingestellte Lichtparameter.

Die Betriebsparameterinformationen können aber auch weitere Parameter des Betriebsgerätes umfassen, die hinsichtlich der Konfiguration des Betriebsgerätes eingestellt werden können, beispielsweise eine Zuordnung zu einer bestimmten Gruppe, eine Adresse oder auch Informationen über den Ort der Installation (ob Strassenbeleuchtung oder Büro, Regioneninformation) oder auch Zeitinformationen (z.B. die Zeitzone).

Verfügt das Leuchtmittelmodul nicht über ein Anzeigemodul können die entsprechenden Informationen, wie generell auch, durch ein Anzeigemodul des Betriebsgeräts angezeigt werden.

Insgesamt erlaubt es die Erfindung somit, die Funktionalität eines Geräts auf ein anderes Gerät zu übertragen und somit das Gerät quasi zu duplizieren bzw. zu klonen. Dies kann entweder herstellerseitig oder auch durch einen Bediener erfolgen.

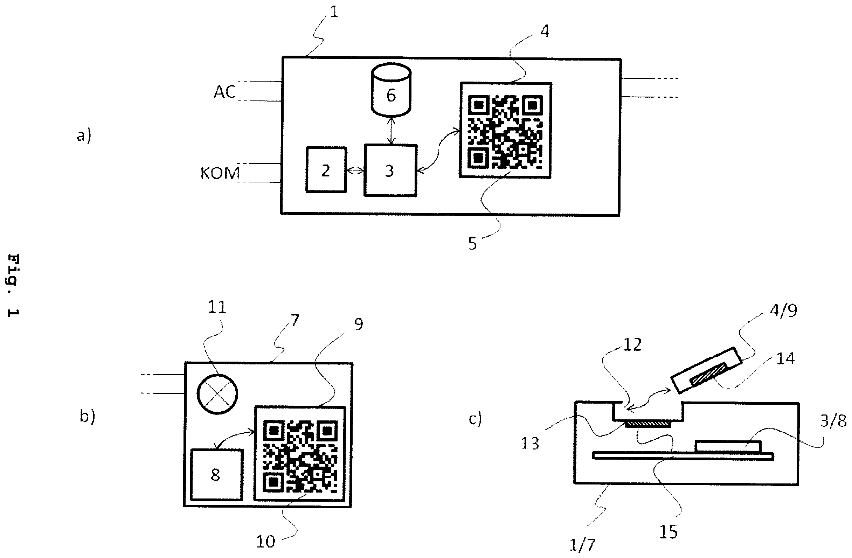

Fig. 1a zeigt schematisch ein Gebäudetechnikgerät 1 gemäß der Erfindung. Das Gebäudetechnikgerät wird vorzugsweise über eine externe Stromversorgung AC (oder auch eine Versorgung mit einer/einem Gleichspannung/Gleichstorm) versorgt und weist Anschlüsse KOM für eine Kommunikationsschnittstelle 2 (DALI) auf.

Das Gerät 1 weist vorzugsweise eine Steuereinheit 3 auf, die ein Anzeigemodul 4 ansteuert und so die Anzeige der Betriebsparameterinformation durch eine Anzeigeeinheit 5 des Anzeigemoduls 4 steuert und veranlasst. Die Anzeigeeinheit 5 kann die Betriebsparameterinformation beispielsweise in Form eines maschinenlesbaren Codes (Barcode, QR-Code, usw.) darstellen. Das Anzeigemodul 4 ist somit mit der Steuereinheit 3 funktional verbunden.

Weiter kann das Gerät 1 einen Speicher 6 und insbesondere einen nicht flüchtigen Speicher aufweisen, in dem die Betriebsparameter abgelegt sind. Das Anzeigemodul 4 zeigt dann die Betriebsparameterinformation basierend auf zumindest einem Teil der Betriebsparameter an, die in dem Speicher 6 abgelegt sind. Beispielsweise können vorgegebene Arten von Betriebsparameterinformation oder auch alle Betriebsparameterinformation oder nur bestimmte Betriebsparameterinformation hinsichtlich einzelner Funktionen durch das Anzeigemodul 4 angezeigt werden.

Bei der Steuereinheit 3 handelt es sich insbesondere um einen Mikrocontroller, eine ASIC, oder IC. Weiter weist das Gerät 1 vorzugsweise die Kommunikationsschnittstelle 2 auf. Dabei kann es sich um eine Kommunikationsschnittstelle für Gebäudetechnik-/Leuchtmittelgerätbusse handeln und insbesondere um eine DALI- oder DSI-Schnittstelle. Die Steuereinheit 3 des Geräts kann dann das Anzeigemodul 4 auch so ansteuern, dass durch die Kommunikationsschnittstelle 2 empfangene Betriebsparameter durch die Anzeigeeinheit des Anzeigemoduls wiedergegeben werden.

In Fig. 1b ist ein Leuchtmittelmodul 7 dargestellt, das ebenfalls eine Steuereinheit 8 aufweist. Auch an dem Leuchtmittelmodul 7 ist ein Anzeigemodul 9 vorgesehen, das eine Anzeigeeinheit 10 aufweist. Auf der Anzeigeeinheit 10 können, z.B. wiederum als maschinenlesbarer Code, beispielsweise der LED-Betriebsstrom I_{LED} und/oder andere für das Leuchtmittelmodul 7 notwendige Betriebsparameter dargestellt werden. Auch hier ist die Steuereinheit 8 funktional mit dem Anzeigemodul 9 verbunden, analog wie für das Gerät beschrieben. Ebenfalls ist ein Leuchtmittel 11, z.B. eine LED, des Leuchtmittelmoduls 7 dargestellt.

Das Anzeigemodul 4, 9, das typischerweise nur einmal bei einem Ausfall des zugeordneten Geräts 1, 7 verwendet wird, kann weiterhin austauschbar sein und somit dem nicht mehr funktionsfähigen Gerät zerstörungsfrei entnommen werden. Damit kann das Anzeigemodul 4, 9 in ein anderes Gerät 1, 7, beispielsweise in ein Ersatzgerät, eingesetzt werden. Das Anzeigemodul 4, 9 kann ebenfalls mit einem Speicher (nicht gezeigt) ausgestattet sein, in dem die Betriebsparameterinformation gespeichert ist. Wird das Anzeigemodul 4, 9 dann in ein anderes Gerät 1, 7 eingesetzt, so kann es, sobald es mit der Steuereinheit 3, 8 des Geräts verbunden ist, die Betriebsparameterinformation an die Steuereinheit 3, 8 übertragen. Die Steuereinheit 3, 8 kann daraufhin die Betriebsparameter entsprechend einstellen.

Das Gerät 1, 7 weist also vorzugsweise eine Halterung 12 für das Anzeigemodul 4, 9 auf. Dabei kann es sich um eine Klemm-, Steck- und/oder Rastverbindung handeln. Es ist auch möglich, dass die Halterung des Anzeigemoduls an dem Gerät mittels einer adhäsiven oder magnetischen Verbindung erfolgt.

Insbesondere weist das Gerät 1, 7 zur Verbindung des Anzeigemoduls 4, 9 mit der Steuereinheit 3, 8 eine Kontaktfläche 13 auf, durch die das Anzeigemodul 4, 9, das eine entsprechende Kontaktfläche 14 aufweisen kann, mit dem Gerät 1, 7 und der Steuereinheit 3, 8 funktional verbindbar ist. Dabei kann das Anzeigemodul 4, 9 auch Verbinder (nicht gezeigt), wie beispielsweise Steckverbinder oder Klemmverbinder aufweisen, die in entsprechende Steck- und/oder Klemmverbinderaufnahmen an dem Gerät 1, 7 aufgenommen werden können. Insbesondere kann die Kontaktfläche 13 des Geräts 1, 7 mit einer Platine (Leiterplatte, PCB) 15 verbunden sein, auf der die Steuereinheit 3, 8 angeordnet ist.

Weiter ist beispielsweise vorgesehen, dass das Anzeigemodul 4, 9 in die Halterung 12 des Geräts geführt wird und dort verrastet bzw. gehalten wird. Die Verbindung mit der Steuereinheit 3, 8 bzw. mit einem in dem Gerät angeordneten Platine 15 kann dann auch über eine Verbindung erfolgen, indem die Kontaktfläche 13 des Geräts mit der Kontaktfläche 14 des Anzeigemoduls in Anlage gebracht wird.

Bei der Anzeigeeinheit 5, 10 handelt es sich, wie gesagt, vorzugsweise um ein E-Paper. Das bedeutet, dass eine Versorgungsspannung des Anzeigemoduls, die von dem Gerät bereitgestellt wird, benötigt wird, um die dargestellte Betriebsparameterinformation zu verändern. Es wird jedoch keine Energie, d.h. kein Strom bzw. keine Spannung, benötigt, um die Darstellung aufrecht zu erhalten.

Zu verstehen ist, dass die vorliegende Erfindung insbesondere für Betriebsgeräte bzw. Vorschaltgeräte für Leuchtmittel einsetzt werden kann.

Somit erlaubt es die Erfindung auf einfache Weise ein Gerät durch ein anderes Gerät zu ersetzen, das die gleichen Betriebsparameter aufweist wie das zu ersetzende Gerät.

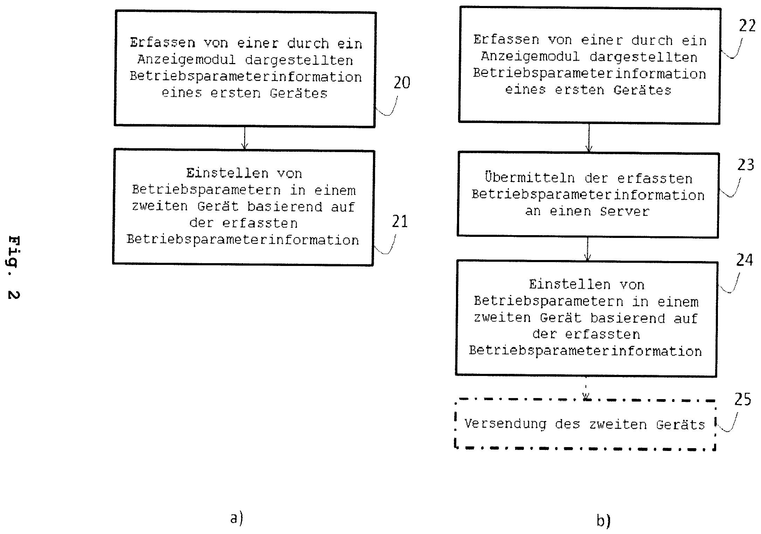

Fig. 2a zeigt exemplarisch das Vorgehen für einen Austausch eines ersten Geräts 1,7. In Schritt 20 wir zunächst eine durch das Anzeigemodul 4, 9 dargestellte Betriebsparameterinformation eines ersten Gerätes erfasst. Im Schritt 21 erfolgt dann ein Einstellen von Betriebsparametern in einem zweiten Gerät basierend auf der erfassten Betriebsparameterinformation des ersten Geräts 1,7.

In Fig. 2a sind prinzipiell die gleichen Schritte gezeigt. Zwischen Schritt 22, der dem Schritt 20 entspricht, und dem Schritt 24, der dem Schritt 24 entspricht, ist jedoch der Schritt 23 vorgesehen, in dem eine Übermittlung der erfassten Betriebsparameterinformation an einen Server, bzw. Rechner als zentralen Speicher, erfolgt.

Daraufhin kann der optionale Schritt 25 erfolgen, der eine Versendung des zweiten, dann konfigurierten Geräts vorsieht.

Es kann jedoch auch vorgesehen sein, dass das zweite Gerät ebenfalls mit dem zentralen Speicher, insbesondere Server/Rechner verbunden wird. Es ist dann möglich, dass das zweite Gerät durch eine Kommunikation zwischen dem zentralen Speicher, insbesondere Server/Rechner und dem zweiten Gerät die Betriebsparameter einstellt. Dazu kann entweder der zentralen Speicher, insbesondere Server/Rechner die Betriebsparameterinformation an das zweite Gerät übermitteln, oder das zweite Gerät kann die Betriebsparameterinformation von dem Server/Rechner abrufen. Die Kommunikation kann dabei über ein (IP-)Kommunikationsnetzwerk erfolgen. Eine Verbindung zwischen zentralen Speicher, insbesondere Rechner/Server und dem zweiten gerät kann jedoch alternativ oder zusätzlich durch direkten Anschluss (z.B. über USB) des zweiten Geräts an den Rechner/Server erfolgen. Insbesondere kann der Rechner die Betriebsparameterinformation von einem Server abrufen und über die direkte oder eine lokale Verbindung die Betriebsparameterinformation an das zweite Gerät übermitteln.

Es wird somit eine Beleuchtungssystem ermöglicht, welches zumindest ein Gebäudetechnikgerät 1, insbesondere Betriebsgerät für Leuchtmittel, und / oder Leuchtmittelmodul 7 aufweisen kann. Das Gebäudetechnikgerät 1 und / oder Leuchtmittelmodul 7 können dazu ausgelegt sein, Betriebsparameter über die Kommunikationsschnittstelle 2, insbesondere eine DALI-Schnittstelle, zu empfangen. Das Beleuchtungssystem weist weiterhin zumindest ein Lesegerät auf, welches zum Erfassen 20 von einer durch das Anzeigemodul 4, 9 dargestellten Betriebsparameterinformation eines Gebäudetechnikgeräts 1 und/oder Leuchtmittelmoduls 7 ausgelegt ist. Das Lesegerät ist mit einem Kommunikationsnetzwerk verbunden, wobei das Kommunikationsnetzwerk einen zentralen Speicher aufweist, und wobei der zentralen Speicher, vorzugsweise Server, dazu ausgelegt ist, die Betriebsparameterinformation abzuspeichern.

Somit wird auch ein Verfahren bereitgestellt, bei dem die abgelesene Betriebsparameterinformation über ein Kommunikationsnetzwerk an zentralen Speicher, vorzugsweise einen Server, übermittelt wird. Das zweite Gebäudetechnikgerät 1 und/oder Leuchtmittelmodul 7 weisen eine Kommunikationsschnittstelle 2 auf, wobei die Kommunikationsschnittstelle 2 direkt oder indirekt mit dem Kommunikationsnetzwerk verbunden ist und die Betriebsparameterinformation über die Kommunikationsschnittstelle 2 durch Abfrage des zentralen Speichers erfasst wird, und basierend auf der erfassten Betriebsparameterinformation die Betriebsparameter in dem zweiten Gebäudetechnikgerät 1 und/oder Leuchtmittelmodul 7 eingestellt.

Das Gebäudetechnikgerät 1 kann eine Kommunikationsschnittstelle 2, insbesondere eine DALI-Schnittstelle oder auch PLC-Schnittstelle (power line carrier Schnittstelle), aufweisen. Das Gebäudetechnikgerät 1 kann beispielsweise über die Kommunikationsschnittstelle 2 Betriebsparameter von anderen an die Kommunikationsschnittstelle 2 angeschlossenen Gebäudetechnikgeräten 1', 1" wie beispielsweise weiteren Betriebsgeräten empfangen. Das Anzeigemodul 4,9 kann auch von anderen Gebäudetechnikgeräten über die Kommunikationsschnittstelle 2 empfangene Betriebsparameter als Betriebsparameterinformation anzeigen. Das Gebäudetechnikgerät 1 kann beispielsweise auch ein Steuergerät sein, welches über die Kommunikationsschnittstelle 2, insbesondere eine DALI-Schnittstelle oder auch PLC-Schnittstelle (power line carrier Schnittstelle), andere Gebäudetechnikgeräte ansteuern kann und von diesen auch Betriebsparameterinformationen empfangen bzw. an diese Betriebsparameterinformation senden kann. Das Gebäudetechnikgerät kann beispielsweise auch eine zentrale AC-DC-Wandlereinheit oder DC-DC-Wandlereinheit sein, welche einen Gleichspannungsbus (DC-Bus) speist. Über den Gleichspannungsbus (DC-Bus) können mehrere Betriebsgeräte oder Leuchtmittel versorgt werden. Gleichzeitig kann das Gebäudetechnikgerät als zentrale AC-DC-Wandlereinheit oder DC-DC-Wandlereinheit auch den Gleichspannungsbus (DC-Bus) als Kommunikationsschnittstelle 2 nutzen und auf dem Gleichspannungsbus (DC-Bus) beispielsweise ein PLC-signal (power line carrier Signal) aufmodulieren. Auf diese Weise können das das Gebäudetechnikgerät als zentrale AC-DC-Wandlereinheit oder DC-DC-Wandlereinheit und die Betriebsgeräte oder Leuchtmittel auch Betriebsparameter empfangen und sich gegenseitig senden. Das Gebäudetechnikgerät als zentrale AC-DC-Wandlereinheit oder DC-DC-Wandlereinheit kann über eine Anzeigeeinheit 3 verfügen und somit Betriebsparameter ausgeben.

## Patentansprüche

1. Gebäudetechnikgerät (1), insbesondere Betriebsgerät für Leuchtmittel, aufweisend ein Anzeigemodul (4), das mit einer Steuereinheit (3) des Gebäudetechnikgeräts (1) in Verbindung steht,
wobei das Gebäudetechnikgerät (1) das Anzeigemodul (4) elektrisch versorgt,
**dadurch gekennzeichnet, dass**
das Anzeigemodul (4) dazu eingerichtet ist, eine Betriebsparameterinformation des Gebäudetechnikgeräts (1) auch bei Wegfall der elektrischen Versorgung durch das Gebäudetechnikgerät (1) ohne eine Erhaltungsspannung anzuzeigen, wobei das Anzeigemodul (4) eine Anzeigeeinheit (5) mit elektronischem Papier aufweist.

2. Gebäudetechnikgerät nach Anspruch 1, **dadurch gekennzeichnet,**
**dass** das Gebäudetechnikgerät (1) einen Speicher (6) aufweist, und das Anzeigemodul (4) dazu eingerichtet ist, in dem Speicher (6) gespeicherte Betriebsparameter als die Betriebsparameterinformation anzuzeigen.

3. Gebäudetechnikgerät nach einem der vorgehenden Ansprüche, **dadurch gekennzeichnet,**
**dass** die Steuereinheit (3) ein Microcontroller ist und die Steuereinheit (3) das Anzeigemodul (4) zur Anzeige der Betriebsparameterinformation ansteuert.

4. Gebäudetechnikgerät nach einem der vorgehenden Ansprüche, **dadurch gekennzeichnet,**
**dass** das Gebäudetechnikgerät (1) eine Kommunikationsschnittstelle (2), insbesondere eine DALI-Schnittstelle, aufweist, und das Anzeigemodul (4) dazu eingerichtet ist, über die Kommunikationsschnittstelle (2) empfangene Betriebsparameter als Betriebsparameterinformation anzuzeigen.

5. Gebäudetechnikgerät nach einem der vorgehenden Ansprüche, **dadurch gekennzeichnet,**
**dass** das Anzeigemodul (4) dazu eingerichtet ist, die Betriebsparameterinformation in Form eines maschinenlesbaren Codes und/oder als Klartext anzuzeigen.

6. Gebäudetechnikgerät nach einem der vorgehenden Ansprüche, **dadurch gekennzeichnet,**
**dass** das Anzeigemodul (4) lösbar an dem Gebäudetechnikgerät (1) gehaltert und insbesondere austauschbar und/oder mit anderen Gebäudetechnikgeräten (1) verbindbar ist.

7. Gebäudetechnikgerät (1) nach einem der vorhergehenden Ansprüche, wobei das Gebäudetechnikgerät (1) ein Leuchtmittelmodul (7) ist.

8. Anzeigemodul (4, 9), aufweisend wenigstens eine Kontaktfläche (14) und/oder Verbinder, über die das Anzeigemodul (4, 9) mit einem Speicher (6), einer Steuereinheit (3, 8) und/oder einer Kommunikationsschnittstelle (2) bzw. mit einer Platine (15) eines Gebäudetechnikgeräts verbindbar ist, insbesondere wenn das Anzeigemodul an dem Gebäudetechnikgerät gehaltert ist,
wobei das Anzeigemodul (4, 9) dazu eingerichtet ist, durch das Gebäudetechnikgerät elektrisch versorgt zu werden, wenn es mit dem Gebäudetechnikgerät (1) in Verbindung steht
**dadurch gekennzeichnet, dass**
das Anzeigemodul (4, 9) dazu eingerichtet ist, eine Betriebsparameterinformation des Gebäudetechnikgerätes (1) auch bei Wegfall der elektrischen Versorgung durch das Gebäudetechnikgerät (1) ohne eine Erhaltungsspannung anzuzeigen, wobei das Anzeigemodul (4, 9) eine Anzeigeeinheit (5, 10) mit elektronischem Papier aufweist.

9. Anzeigemodul nach Anspruch 8, **dadurch gekennzeichnet, dass** die Anzeigeeinheit (5, 10) einen nichtflüchtigen Speicher aufweist, und das Anzeigemodul (4) dazu eingerichtet ist, angezeigte Betriebsparameter in dem nichtflüchtigen Speicher zu speichern und insbesondere gespeicherte Betriebsparameter bei Verbindung mit einem Gebäudetechnikgerät (1) und/oder Leuchtmittelmodul (7) auszugeben.

10. Gebäudetechnikgerät (1) gemäß einem der Ansprüche 1 bis 7, **dadurch gekennzeichnet,**
**dass** das Gebäudetechnikgerät (1) einen Sensor aufweist, insbesondere einen optischen Sensor, vorzugsweise eine Kamera, der dazu ausgelegt ist, eine von einem weiteren Anzeigemodul nach Anspruch 8 oder 9 angezeigte Betriebsparameterinformation zu erfassen.

11. Beleuchtungssystem aufweisend zumindest ein Gebäudetechnikgerät (1), insbesondere Betriebsgerät für Leuchtmittel, nach einem der Ansprüche 1 bis 7 oder 10, **dadurch gekennzeichnet,**
**dass** das Gebäudetechnikgerät (1) dazu ausgelegt ist, Betriebsparameter über die Kommunikationsschnittstelle (2), insbesondere eine DALI-Schnittstelle, zu empfangen, wobei das Beleuchtungssystem weiterhin zumindest ein Lesegerät aufweist, welches zum Erfassen (20) von einer durch das Anzeigemodul (4, 9) dargestellten Betriebsparameterinformation eines Gebäudetechnikgeräts (1) und/oder Leuchtmittelmoduls (7) ausgelegt ist, und das Lesegerät mit einem Kommunikationsnetzwerk verbunden ist, wobei das Kommunikationsnetzwerk einen zentralen Speicher aufweist, und wobei der zentralen Speicher, vorzugsweise Server, dazu ausgelegt ist, die Betriebsparameterinformation abzuspeichern.

12. Verfahren zur Einstellung von Betriebsparametern in einem Gebäudetechnikgerät, **dadurch gekennzeichnet,**
**dass** das Verfahren folgende Schritte aufweist:
- Erfassen (20) von einer durch ein Anzeigemodul (4, 9) dargestellten Betriebsparameterinformation eines Gebäudetechnikgeräts (1) gemäß einem der Ansprüche 1 bis 7 oder 10, vorzugsweise mittels eines Lesegeräts,
- Einstellen (21) von Betriebsparametern in einem zweiten Gebäudetechnikgerät (7) und/oder Leuchtmittelmodul (1) basierend auf der erfassten Betriebsparameterinformation.

13. Verfahren nach Anspruch 12, **dadurch gekennzeichnet, dass** die abgelesene Betriebsparameterinformation über ein Kommunikationsnetzwerk an einen zentralen Speicher, vorzugsweise einen Server, übermittelt wird (23), wobei daraufhin eine Versendung des zweiten Gebäudetechnikgeräts (1) und/oder Leuchtmittelmoduls (7) veranlasst wird (25), und dass das Einstellen (22) der Betriebsparameter vor der Versendung erfolgt, insbesondere durch einen Hersteller des Gebäudetechnikgeräts (1) und/oder Leuchtmittelmoduls (7).

14. Verfahren nach Anspruch 12, **dadurch gekennzeichnet dass** das zweite Gebäudetechnikgerät (1) und/oder Leuchtmittelmodul (7) einen Sensor aufweist, und die Betriebsparameterinformation auf eine Benutzerinteraktion mit dem Sensor erfasst wird und basierend auf der erfassten Betriebsparameterinformation die Betriebsparameter in dem zweiten Gebäudetechnikgerät (1) und/oder Leuchtmittelmodul (7) eingestellt werden.

15. Verfahren nach Anspruch 12, 13 oder 14, **dadurch gekennzeichnet,**
**dass** die abgelesene Betriebsparameterinformation über ein Kommunikationsnetzwerk an zentralen Speicher, vorzugsweise einen Server, übermittelt wird (23), wobei das zweite Gebäudetechnikgerät (1) und/oder Leuchtmittelmodul (7) eine Kommunikationsschnittstelle (2) aufweist, wobei die Kommunikationsschnittstelle (2) direkt oder indirekt mit dem Kommunikationsnetzwerk verbunden ist und die Betriebsparameterinformation über die Kommunikationsschnittstelle (2) durch Abfrage des zentralen Speichers erfasst wird, und basierend auf der erfassten Betriebsparameterinformation die Betriebsparameter in dem zweiten Gebäudetechnikgerät (1) und/oder Leuchtmittelmodul (7) eingestellt werden.

## Claims

1. A building technology device (1), in particular an operating device for lighting means, having a display module (4), which is connected to a control unit (3) of the building technology device (1), wherein the building technology device (1) electrically supplies the display module (4),
**characterized in that**
the display module (4) is configured to display operating parameter information of the building technology device (1) even in the case of discontinuation of the electrical supply by the building technology device (1) without a float voltage, wherein the display module (4) has a display unit (5) with electronic paper.

2. The building technology device according to Claim 1, **characterized in that** the building technology device (1) has a memory (6), and the display module (4) is configured to display operating parameters stored in the memory (6) as the operating parameter information.

3. The building technology device according to any one of the preceding claims, **characterized in that** the control unit (3) is a micro-controller and the control unit (3) controls the display module (4) for the display of the operating parameter information.

4. The building technology device according to any one of the preceding claims, **characterized in that** the building technology device (1) has a communication interface (2), in particular a DALI interface, and the display module (4) is configured to display operating parameters received via the communication interface (2) as operating parameter information.

5. The building technology device according to any one of the preceding claims, **characterized in that** the display module (4) is configured to display the operating parameter information in the form of a machine-readable code and/or as clear text.

6. The building technology device according to any one of the preceding claims, **characterized in that** the display module (4) is held detachably on the building technology device (1) and can be interchanged and/or connected to other building technology devices (1).

7. The building technology device (1) according to any one of the preceding claims, wherein the building technology device (1) is a lighting means module (7).

8. A display module (4, 9), having at least one contact surface (14) and/or connector, via which the display module (4, 9) can be connected to a memory (6), a control unit (3, 8) and/or a communication interface (2) or to a circuit board (15) of the building technology device, in particular if the display module is held on the building technology device,
wherein the display module (4, 9) is configured, to be electrically supplied by the building technology device, if it is connected to the building technology device (1),
**characterized in that**
the display module (4, 9) is configured to display operating parameter information of the building technology device (1) even in the case of discontinuation of the electrical supply by the building technology device (1) without a float voltage, wherein the display module (4, 9) has a display unit (5, 10) with electronic paper.

9. The display module according to Claim 8, **characterized in that** the display unit (5, 10) has a non-volatile memory, and the display module (4) is configured to store displayed operating parameters in the non-volatile memory and in particular to output stored operating parameters when connected to a building technology device (1) and/or lighting means module (7).

10. The building technology device (1) according to any one of Claims 1 to 7, **characterized in that** the building technology device (1) has a sensor, in particular an optical sensor, preferably a camera, which is configured to detect operating parameter information displayed by a further display module according to Claim 8 or 9.

11. A lighting system having at least one building technology device (1), in particular an operating device for lighting means, according to any one Claims 1 to 7 or 10, **characterized in that** the building technology device (1) is configured to receive operating parameters via the communication interface (2), in particular a DALI interface, wherein the lighting system furthermore has at least one reader, which is configured to detect (20) operating parameter information of a building technology device (1) and/or lighting means module (7) displayed by the display module (4, 9), and the reader is connected to a communication network, wherein the communication network has a central memory, and wherein the central memory, preferably a server, is configured to store the operating parameter information.

12. A method for setting operating parameters in a building technology device, **characterized in that** the method has the following steps:
- Detection (20) of operating parameter information of a building technology device (1) displayed by a display module (4, 9) according to any one of Claims 1 to 7 or 10, preferably by means of a reader,
- setting (21) operating parameters in a second building technology device (7) and/or lighting means module (1) based on the detected operating parameter information.

13. The method according to Claim 12, **characterized in that** the read operating parameter information is transmitted (23) via a communication network to a central memory, preferably a server, wherein then a dispatch of the second building technology device (1) and/or lighting means module (7) is caused (25), and that the setting (22) of the operating parameters takes place before the dispatch, in particular by a manufacturer of the building technology device (1) and/or lighting means module (7).

14. The method according to Claim 12, **characterized in that** the second building technology device (1) and/or lighting means module (7) has a sensor, and the operating parameter information relating to a user interaction with the sensor is detected and based on the detected operating parameter information the operating parameters are set in the second building technology device (1) and/or lighting means module (7).

15. The method according to Claim 12, 13 or 14, **characterized in that** the read operating parameter information is transmitted (23) via a communication network to a central memory, preferably a server, wherein the second building technology device (1) and/or lighting means module (7) has a communication interface (2), wherein the communication interface (2) is connected directly or indirectly to the communication network and the operating parameter information is detected via the communication interface (2) by querying the central memory, and based on the detected operating parameter information the operating parameters are set in the second building technology device (1) and/or lighting means module (7).

## Revendications

1. Appareil de gestion de bâtiment (1), plus particulièrement appareil de commande pour moyen d'éclairage, comprenant un module d'affichage (4), qui est relié avec une unité de commande (3) de l'appareil de gestion de bâtiment (1), l'appareil de gestion de bâtiment (1) alimentant électriquement le module d'affichage (4),
**caractérisé en ce que**
le module d'affichage (4) est conçu pour afficher une information de paramètre de fonctionnement de l'appareil de gestion de bâtiment (1) même lors d'une défaillance de l'alimentation électrique par l'appareil de gestion de bâtiment (1) sans tension de maintien, le module d'affichage (4) comprenant une unité d'affichage (5) avec un papier électronique.

2. Appareil de gestion de bâtiment selon la revendication 1, **caractérisé en ce que** l'appareil de gestion de bâtiment (1) comprend une mémoire (6) et le module d'affichage (4) est conçu pour afficher les paramètres de fonctionnement enregistrés dans la mémoire (6) sous la forme de l'information de paramètre de fonctionnement.

3. Appareil de gestion de bâtiment selon l'une des revendications précédentes, **caractérisé en ce que** l'unité de commande (3) est un microcontrôleur et l'unité de commande (3) contrôle le module d'affichage (4) pour l'affichage de l'information de paramètres de fonctionnement.

4. Appareil de gestion de bâtiment selon l'une des revendications précédentes, **caractérisé en ce que** l'appareil de gestion de bâtiment (1) comprend une interface de communication (2), plus particulièrement une interface DALI et le module d'affichage (4) est conçu pour afficher les paramètres de fonctionnement reçus par l'intermédiaire de l'interface de communication (2) sous la forme d'une information de paramètres de fonctionnement.

5. Appareil de gestion de bâtiment selon l'une des revendications précédentes, **caractérisé en ce que** le module d'affichage (4) est conçu pour afficher l'information de paramètres de fonctionnement sous la forme d'un code lisible par une machine et/ou sous la forme d'un texte en clair.

6. Appareil de gestion de bâtiment selon l'une des revendications précédentes, **caractérisé en ce que** le module d'affichage (4) est maintenu de manière amovible sur l'appareil de gestion de bâtiment (1) et plus particulièrement est interchangeable et/ou peut être relié avec d'autres appareils de gestion de bâtiment (1).

7. Appareil de gestion de bâtiment (1) selon l'une des revendications précédentes, l'appareil de gestion de bâtiment (1) étant un module de moyen d'éclairage (7).

8. Module d'affichage (4, 9) comprenant au moins une surface de contact (14) et/ou des connecteurs par l'intermédiaire desquels le module d'affichage (4, 9) peut être relié avec une mémoire (6), une unité de commande (3, 8) et/ou une interface de communication (2) ou avec une platine (15) d'un appareil de gestion de bâtiment, plus particulièrement lorsque le module d'affichage est maintenu sur l'appareil de gestion de bâtiment, le module d'affichage (4, 9) étant conçu pour être alimenté électriquement par l'appareil de gestion de bâtiment lorsqu'il est relié avec l'appareil de gestion de bâtiment (1),
**caractérisé en ce que**
le module d'affichage (4, 9) est conçu pour afficher une information de paramètres de fonctionnement de l'appareil de gestion de bâtiment (1) même lors de la défaillance de l'alimentation électrique par l'appareil de gestion de bâtiment (1) sans tension de maintien, le module d'affichage (4, 9) comprenant une unité d'affichage (5, 10) avec papier électronique.

9. Module d'affichage selon la revendication 8, **caractérisé en ce que** l'unité d'affichage (5, 10) comprend une mémoire non volatile et le module d'affichage (4) est conçu pour enregistrer les paramètres de fonctionnement affichés dans la mémoire non volatile et plus particulièrement de sortir les paramètres de fonctionnement enregistrés lors de la liaison avec un appareil de gestion de bâtiment (1) et/ou un module de moyen d'éclairage (7).

10. Module d'affichage selon l'une des revendications 1 à 7, **caractérisé en ce que** l'appareil de gestion de bâtiment (1) comprend un capteur, plus particulièrement un capteur optique, de préférence une caméra, qui est conçue pour détecter une information de paramètres de fonctionnement affichée par un autre module d'affichage selon la revendication 8 ou 9.

11. Système d'éclairage comprenant au moins un appareil de gestion de bâtiment (1), plus particulièrement un appareil de commande pour moyen d'éclairage, selon l'une des revendications 1 à 7 ou 10, **caractérisé en ce que** l'appareil de gestion de bâtiment (1) est conçu pour recevoir des paramètres de fonctionnement par l'intermédiaire de l'interface de communication (2), plus particulièrement une interface DALI, le système d'éclairage comprenant en outre au moins un appareil de lecture qui est conçu pour la détection (20) d'une information de paramètres de fonctionnement représentée par le module d'affichage (4, 9) d'un appareil de gestion de bâtiment (1) et/ou d'un module de moyen d'éclairage (7), et l'appareil de lecture étant relié avec un réseau de communication, le réseau de communication comprenant une mémoire centrale et la mémoire centrale, de préférence un serveur, étant conçue pour enregistrer l'information de paramètres de fonctionnement.

12. Procédé de réglage de paramètres de fonctionnement dans un appareil de gestion de bâtiment, **caractérisé en ce que** le procédé comprenant les étapes suivantes :
- détection (20) d'une information de paramètres de fonctionnement représentée par un module d'affichage (4, 9) d'un appareil de gestion de bâtiment (1) selon l'une des revendications 1 à 7 ou 10, de préférence au moyen d'un appareil de lecture,
- réglage (21) de paramètres de fonctionnement dans un deuxième appareil de gestion de bâtiment (7) et/ou module de moyen d'éclairage (1) sur la base de l'information de paramètres de fonctionnement détectée.

13. Procédé selon la revendication 12, **caractérisé en ce que** l'information de paramètres de fonctionnement lue est transmise (23) par l'intermédiaire d'un réseau de communication à une mémoire centrale, de préférence un serveur, un envoi étant en outre effectué (25) par le deuxième appareil de gestion de bâtiment (1) et/ou le module de moyen d'éclairage (7) et **en ce que** le réglage (22) des paramètres de fonctionnement a lieu avant l'envoi, plus particulièrement par un fabricant de l'appareil de gestion de bâtiment (1) et/ou du module de moyen d'éclairage (7).

14. Procédé selon la revendication 12, **caractérisé en ce que** le deuxième appareil de gestion de bâtiment (1) et/ou le module de moyen d'éclairage (7) comprend un capteur et l'information de paramètres de fonctionnement est détectée lors d'une interaction de l'utilisateur avec le capteur et, sur la base de l'information de paramètres de fonctionnement détectée, les paramètres de fonctionnement sont réglés dans le deuxième appareil de gestion de bâtiment (1) et/ou le module de moyen d'éclairage (7).

15. Procédé selon la revendication 12, 13 ou 14, **caractérisé en ce que** l'information de paramètres de fonctionnement lue est transmise (23) par l'intermédiaire d'un réseau de communication à une mémoire centrale, de préférence un serveur, le deuxième appareil de gestion de bâtiment (1) et/ou le module de moyen d'éclairage (7) comprenant une interface de communication (2), l'interface de communication (2) étant reliée directement ou indirectement avec le réseau de communication et l'information de paramètres de fonctionnement étant détectée par l'intermédiaire de l'interface de communication (2) par une interrogation de la mémoire centrale et sur la base de l'information de paramètres de fonctionnement détectée, les paramètres de fonctionnement sont réglés dans le deuxième appareil de gestion de bâtiment (1) et/ou le module de moyen d'éclairage (7).
